Europäisches Patentamt

European Patent Office

Office européen des brevets

(11) Publication number: **0 333 239**
**A2**

## EUROPEAN PATENT APPLICATION

(21) Application number: **89200141.3**

(22) Date of filing: **23.01.89**

(51) Int. Cl.⁴: **F23L 15/02 , F23C 9/00 , F23C 6/04 , F23C 7/00**

(30) Priority: **16.03.88 US 168892**
**25.05.88 US 198739**

(43) Date of publication of application:
**20.09.89 Bulletin 89/38**

(84) Designated Contracting States:
**AT BE CH DE ES FR GB IT LI LU NL SE**

(71) Applicant: **BLOOM ENGINEERING COMPANY, INC.,**
**Horning and Curry Roads**
**Pittsburgh Pennsylvania 15236(US)**

(72) Inventor: **Hovis, James E.**
**5545-J Forbes Avenue**
**Pittsburgh Pennsylvania 15217(US)**
Inventor: **Finke, Harry P.**
**1306 Old Meadow Road**
**Pittsburgh Pennsylvania 15241(US)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) Method and apparatus for suppressing NOx formation in regenerative burners.

(57) A method and apparatus for repressing Nox formation and controlling flame shape and characteristic in a regenerative burner during combustion. The regenerative burner having heat storage units with combustion effluent/combustion air ducts therethrough, fuel intake means and a burner. The burner may include a burner baffle, or may include a plurality of gas jets entrained in generally converging fashion for control of the flame characteristics and shape dispositive of NOx formation. The burner may provide for staged combustion, either by means of sequential fuel injection or sequential provision of combustion air, or the burner may repress NOx formation by vitiation of combustion air with products of combustion. The regenerative burner may also include an interconnecting duct communicating with the burners having a coaxial gas nozzle for injecting a high kinetic energy gas stream into the exhausting hot flue gas to induce a portion of the hot flue gas into the interconnecting duct to pass the hot flue gas to the firing burner for vitiation purposes thereby repressing NOx formation.

Fig. I

## METHOD AND APPARATUS FOR SUPPRESSING NOx FORMATION IN REGENERATIVE BURNERS

### BACKGROUND OF THE INVENTION

The invention relates to generally regenerative type burners for heating a furnace, and more particularly to regenerative burners with minimized NOx formation in the ultimate combustion effluents.

Regenerative-type burners for furnaces are well-known in the art in varied forms and designs, but they share the common feature whereby heat storage units are provided to withdraw and store heat from hot combustion effluents known as flue gas, with subsequent transfer of the heat to preheat incoming combustion air. The earliest regenerative-type furnaces were symmetrical arrangements having both burner(s) and heat storage units (often solid structural arrays of "checker chamber" bricks) in place on each of two sides of the furnace. Firing of such a regenerative furnace began with the burner(s) on one side, with concomitant storage of the heat present in the combustion effluents by the heat storage units on the second side. After optimal heating of the heat storage units, or the "checker chamber," the air flow in the furnace was reversed to draw combustion air in through the checker chamber, thus preheating the combustion air. Ducts in the checker chamber thus alternately conveyed combustion products and combustion air, and the burners functioned alternately as burners and as flues.

Modern regenerative systems do not involve complete symmetrical furnaces but instead include specialized regenerative burners employed, typically, in pairs. Each of the paired regenerative burners is equipped with heat storage units, ordinarily in the form of compact regenerative beds, through which combustion air passes en route to the burner. Because the burners are employed in pairs, one burner is fired at a time while the other functions as a flue and heat storage bed. Then every 20-120 seconds or so, flow in the furnace is reversed and the burners "exchange" functions, that is, the first-fired burner becomes the flue gas exhaust/heat storage bed as the second burner fires. A system exemplary of one paired burner arrangement is found in U.S. Patent No. 4,522,588.

A persistent problem with regenerative systems involves the extremely high NOx concentrations inevitably present in the combustion effluents, produced as a result of the extremely high air preheats and flame temperatures, as well as through fuel bound nitrogen. As a result, regenerative systems which historically enjoyed industry-wide acceptance now cannot meet the emissions standards in an ever-increasing number of localities and/or process conditions. Additionally, the burners used with prior art "regenerator pairs" are of a fixed design and are not adaptable to control flame shape or characteristic. There is a need for low NOx burner concepts which can be broadly adapted to the specific applications by altering the flame temperature to meet NOx emission requirements. A need therefore persists for regenerative burner systems which provide the heat-regenerative function of prior art systems yet provide for significant NOx reduction and application adaptability as well.

### SUMMARY OF THE INVENTION

In order to meet this need, the present invention includes a pair of first and second spaced-apart regenerative burners having fuel delivery means, a burner chamber, a regenerative bed and a means incorporated within the regenerative burner apparatus for repressing NOx formation. The burners are adapted to operate cyclically such that a first burner is in a firing mode directing hot gases into a furnace interior while a flue gas stream exits the furnace and passes through the second burner chamber and then passes to the regenerative heat storage bed associated with the second burner.

NOx can be substantially reduced by incorporating in the burner design a suitable baffle or, more broadly, means to induce recirculation of combustion gases back into the primary combustion zone, by staging the fuel through sequential fuel injection, by staging the combustion air through sequential introduction of that air or through the use of vitiated combustion air where products of combustion are mixed with the combustion air on a controlled basis to reduce the oxygen content of the air, either by mixing flue gas into the combustion air at the fan inlet or within the burner structure itself.

The regenerative burner apparatus may, therefore, include a regenerative burner having a burner baffle with air jets or may include a plurality of gas jets, in such a manner that the jets induce recirculation of combustion gases back into the primary combustion zone to suppress NOx and also act to control the fuel/air mixing rates which establish flame shape and characteristic. The burner may provide staged combustion, either gas or air, or may suppress NOx through vitiating the air within the burner or through the use of vitiated air from the combustion fan. Certain embodiments of the present regenerative burner may include combustion gas recirculation back into the primary combustion zone, the use of vitiated air and either fuel or combustion air staging.

The present invention may also include burners having chambers which are connected at a respective combustion end to a spaced pair of first ducts which communicate with the interior of the furnace or to the tube of a U-shaped radiant tube burner and alternately act to emit hot combustion gases into the furnace or to exhaust hot flue gases from the furnace. Each of the burners have a heat regenerator media bed associated therewith which are respectively connected to a combustion air inlet duct/flue gas outlet duct. A vitiation duct interconnects the two burners on the furnace side of the regenerative beds and communicates with the interior chamber portion of each burner. A nozzle is positioned at each of the burner chambers to alternately inject a high velocity gas stream into the interconnecting duct. The high velocity stream entrains a portion of the flue gas containing hot products of combustion ("POC") exiting the furnace at the left burner and causes the entrained hot flue gas to vitiate the preheated combustion air in the right hand burner chamber. The balance of the hot flue gases pass through the left bank regenerative media bed to transfer its heat thereto for later transfer to a reverse flowing stream of combustion air (when the left bank is in the firing mode). A fuel nozzle or other injector means introduces a fuel stream to the mixture of hot POC containing flue gas and preheated combustion air at the right bank burner chamber whereby suppressed or reduced NOx formation in the burner flame is obtained. The regenerator sizing is significantly reduced while cycle efficiency is also increased due to the fact that the preheat combustion air is vitiated with a hot POC containing flue gas at very high temperatures, for example, between about 1800° to 2000° F. The lowered oxygen content of the vitiated combustion air lowers flame temperatures and minimizes NOx formation while the high BTU content of the hot vitiating POC containing flue gas contributes to higher furnace efficiencies.

In one preferred form of the invention, the injected stream of gas is injected tangentially relative to the stream of hot flue gas exiting the furnace to impart a swirling motion to the flue gas to create an enriched layer of POC which is then entrained in the vitiating stream. The present regenerative burners reduce NOx, control the flame shape and characteristic, yet preserve the high thermal efficiency characteristics of the regenerative systems.

## BRIEF DESCRIPTION OF THE DRAWINGS

Figure 1 is a schematic view of a furnace and two low NOx regenerative burners, also showing the method of vitiating the air at the fan inlet;

Figure 2 is a sectional view of a first embodiment of a low NOx regenerative burner having a burner baffle;

Figure 2a is a section taken along lines 2a-2a of Figure 2;

Figure 3 is a sectional view of a second embodiment of a regenerative burner having fuel injection nozzles for combustion air and combustion gas entrainment;

Figures 4 and 5 are sectional views of two regenerative burners (third and fourth embodiments) adapted for staged combustion;

Figure 6 is a sectional view of a fifth embodiment of a regenerative burner in which combustion air is vitiated with products of combustion;

Figures 7 and 9 are sectional views of a sixth and seventh embodiment of a regenerative burner having pairs of converging nozzles;

Figure 8 is a sectional view taken along lines VIII-VIII of Figure 6; and

Figure 10 is a sectional view of an eighth embodiment of a regenerative burner in which first and second concentric streams (fuel/fuel, fuel/air, fuel/products of combustion) are introduced into the combustion site.

Figure 11 is a schematic plan view of a twinned heat regenerative burner system according to the present invention;

Figure 12 is a schematic view in front elevation of the embodiment of the invention depicted in Figure 1;

Figure 13 is a schematic plan view of a further embodiment of the present invention in the form of twined burners having a modified form of fuel delivery;

Figure 14 is a cross-sectional view of the fuel injector manifold taken along lines XIV-XIV of Figure 13; and

Figure 15 is a partial cross-sectional view of the gas injector left bank burner chamber and interconnecting duct taken along line XV-XV of Figure 13.

## DETAILED DESCRIPTION OF THE INVENTION

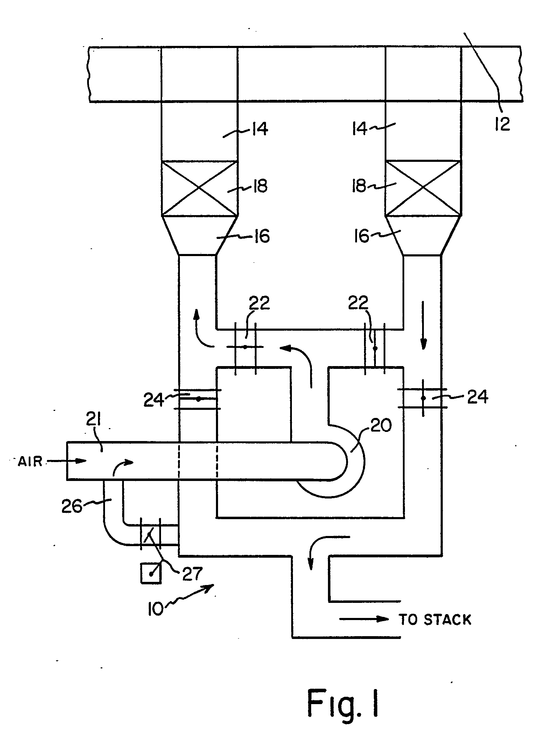

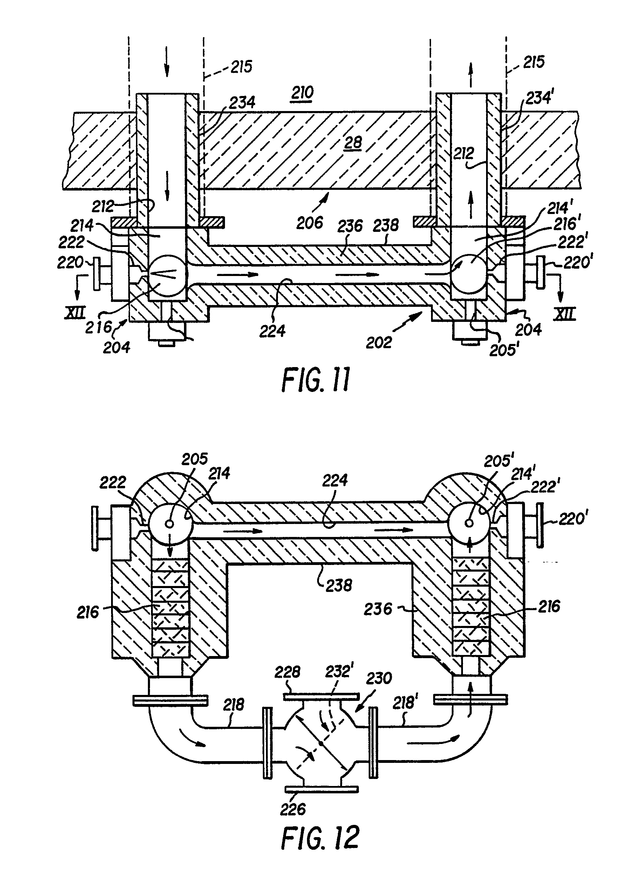

Reference is now made to the drawings in which identical elements are designated by identical reference numerals throughout the various figures. In Figure 1, a regenerative system 10 is illustrated in which a furnace chamber 12 is equipped with a pair of regenerative burners 14 as shown. The burner pair includes two identical right and left burner units. The left and right burner units are mounted within a wall of a furnace for supplying heat to the interior chamber thereof. The left and right burners are adapted to alternately fire combustion products directly into the furnace chamber. The invention is also suitable for use in connection with an alternately fired, continuous U-shaped, radiant tube regenerative burner system, the radiant tube partially shown in phantom lines and designated by 215 in Figure 11. In both instances, i.e., direct fired and radiant tube fired, the invention provides a self-vitiating low NOx regenerative burner pair. As appreciated in the art, a regenerative type burner is significantly more efficient in recovering waste heat from hot flue gases than the common reciprocator style preheaters previously used in connection with radiant tube burners.

Each regenerative burner 14 is connected to an immediately adjacent regenerative bed 18, through which combustion air/exhaust pass between the burner 14 and the combustion air/exhaust passage 16. Combustion air is provided to one burner 14 at a time by action of the combustion blower 20, so that when the left burner 14 (shown in Figure 1) is firing, the left combustion air valve 22 is open and the left exhaust valve 24 is closed, with the right combustion air valve 22 and right exhaust valve 24 closed and open, respectively, to enable the right burner 14 to function as a flue for the furnace chamber 12. As a result, when the left burner 14 fires, the regenerative bed 18 of the right burner 14 collects heat from the combustion effluents. When flow in the furnace is reversed, the right regenerative bed 18 preheats combustion air for the left regenerative burner 14. Connection 26 shown with the control valve 27 provides the means for vitiating the air with products of combustion at the fan inlet 21.

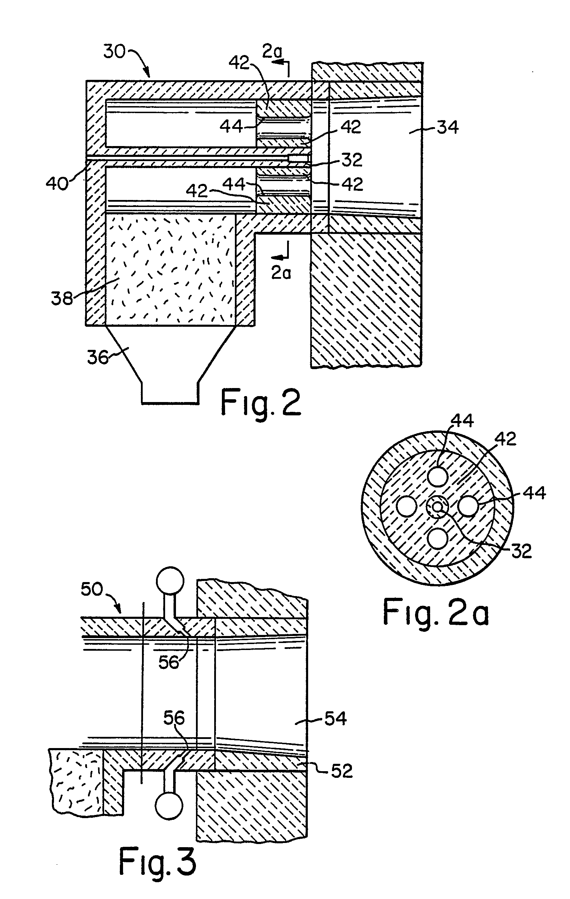

Referring now to Figure 2, the regenerative burner as illustrated includes a burner 30, from which a fuel nozzle 32 (embedded in refractory) fuels combustion in the port 34. Alternatively, the fuel nozzle may be insulated or air cooled by other means known in the art. A pair of burners (only one shown) provide combustion for an adjacent furnace chamber as shown in Figure 1 and as known in the art. Combustion air is provided to the burner 30 via air uptake 36, which passes through the regenerative bed 38 as shown. The fuel nozzle 32 is supplied by a fuel line 40. Disposed adjacent the fuel nozzle 32 is a burner baffle 42, which channels the flow of combustion air into the port 34.

The structure of the burner baffle 42 is more readily seen in Figure 2a, which is a section taken along line 2a-2a of Figure 2. The burner baffle 42 is a generally cylindrically shaped structure having four burner baffle apertures 44 therein, spaced as shown. (In Figure 1, the burner baffle apertures 44 are shown above and below the nozzle end of the fuel line 40; the exit of each aperture 44 is coplanar with the tip of the fuel nozzle 32.) As shown in Figure 2a, air passage is prevented except through the burner baffle apertures 44. The jet effect of the combustion air introduced through the four apertures immediately upstream of the fuel nozzle 32 creates a low pressure region at the baffle face which induces recirculation of combustion gases back into the primary combustion zone, thus lowering the flame temperature and substantially reducing NOx levels in the combustion effluents of the burner. The use of four apertures, spaced as shown, provides adequate recirculation regions for the combustion gases between the holes. The same combustion air jet action induces fuel flow to the combustion air, providing the required mixing of fuel and air which strongly influences flame shape and characteristic. The angularity and direction of the combustion air holes can be adjusted to control flame shape and characteristic. Although the four-hole burner baffle 42 is preferred from the standpoint of minimized NOx, the number and arrangement of the combustion air holes can be varied as required and incorporated into the regenerative burner 30 of Figure 2.

Dimensions for the burner baffles 42 will vary, but an exemplary baffle is 6 1/2 inches in outer diameter, with proportionally sized apertures as shown. Baffle diameters commonly range between 5 and 30 inches. Although the four-hole burner baffle 42 is preferred, as the baffle which maximizes NOx reduction, 6-, 8-, 9- and 12-hole baffles also reduce NOx and may therefore also be incorporated into the regenerative burner 30 of Figure 2.

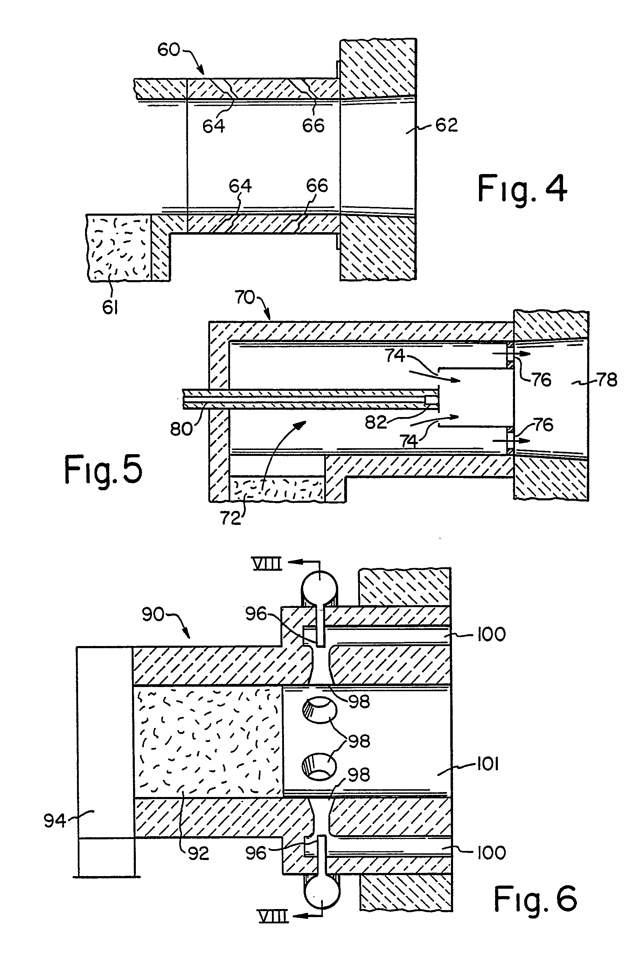

Referring once again to Figure 2, and as applies to all other embodiments of the invention, the burner 30 is constructed of a fabricated metal outer casing (not shown) and is fully insulated with a suitable insulating material. The fuel lines and nozzles are fabricated of standard materials including metals, and such metal structures are either adequately insulated or air cooled when fully exposed (see Figures 2 and 5) or are embedded in or shielded with refractory in other embodiments. Materials suitable for use in the fabrication of the regenerative bed 38 are known in the art.

The second embodiment of the present low NOx regenerative burner is illustrated in Figure 3. Figure 3 is a partial illustration of a burner 50 having a port block 52 and a port 54. The air uptake and heat storage bed are identical to those of the first embodiment of the invention, and these structures therefore do not appear in detail in Figure 3. Combustion is fueled by fuel apertures 56, which inject the fuel into the port 54 in the angled fashion as shown. (As an alternative to fuel apertures in the surrounding refractory, conventional fuel lines and nozzles may be used.) Although two fuel apertures 56 are shown in Figure 3, additional fuel apertures may be provided in an evenly-spaced, concentric planar arrangement including 4, 6, 8 or 10 fuel apertures, for example. The forward angled fuel apertures function to induce recirculation of combustion gases back to the primary combustion zone, depressing NOx. The fuel jets also entrain combustion air promoting the mixing of fuel and air and affecting flame shape and characteristic. The design can be altered with respect to the angularity and direction of the individual fuel jets to vary the flame shape and characteristic to suit specific requirements. The number and arrangements of the jets (angularity to the center line of the burner and spin angle) can be varied to control the degree of NOx suppression as well as flame shape and characteristic. The multiple jet arrangement shown, used in conjunction with individual automated shut-off valves between the supply manifold and each jet, offers the additional advantage of the ability to reduce the number of jets as fuel demand reduces in order to maintain entrainment energy and mixing energy. For example, a 6 jet arrangement would permit shut off of two jets at 2/3 flow and four jets at 1/3 flow maintaining maximum jet energy on the remaining active jets. Although opposite fuel apertures 56 as shown in Figure 3 inject the fuel at relative 90° angles, injection may be effected at relative angles between about 30° and about 150° related to the center line of the burner and also could be provided with spin action through the use of a second angle to the injection point.

Figures 4 and 5 illustrate third and fourth embodiments of the present low NOx regenerative burners in which combustion is staged. Staged fuel accomplishes staged combustion in the burner of Figure 4; staged air effects staged combustion in the burner of Figure 5. Referring first to Figure 4, the burner 60, having a regenerative bed 6I and a port 62, includes first stage fuel apertures 64 and second stage fuel apertures 66. The fuel supply to the first stage fuel apertures 64 is limited so that between 30-70% of the fuel is injected by the first stage fuel apertures 64. Second stage fuel apertures 66, positioned between the first stage fuel apertures 64 and the port 62, inject the balance of the fuel (30-70%) into the combustion site. Combustion air for the staged combustion enters via the regenerative bed 61. This two-stage arrangement functions to reduce NOx formation not only as a result of the combustion gas and combustion air entrainment induced by the paired apertures 64 and 66, but also as a result of the presence of considerable excess air at the site of the first stage of combustion, which reduces the temperature in the primary combustion zone and suppresses NOx formation. Although two sets of two fuel apertures each are shown for the purpose of this third embodiment of the invention, more than two fuel nozzles at each of the two stages of combustion may be used, preferably in an evenly-spaced, planar concentric configuration. As with the other embodiments of the present invention, the burner 60 is adapted to function, when the flow in the furnace is reversed, as a flue.

Referring now to Figure 5, the burner which effects staged combustion with staged combustion air is illustrated in pertinent part. The burner 70 having a regenerative bed 72 has a fuel line 80, fuel nozzle 82 (both embedded in refractory or otherwise insulated or cooled) and a port 78. Combustion air entering the burner 70 via the regenerative bed 72 mixes with fuel in two stages by means of the primary air passages 74 and the secondary air passages 76. Primary and secondary combustion are accomplished by initial provision, through primary air passages 74, of only 30-70% of the combustion air at the site of the fuel nozzle 82. The remaining 30-70% of the combustion air travels via secondary air passages 76 to effect secondary combustion in the port 78. This staged air combustion device operates fuel rich in the primary combustion zone, reducing flame temperature and thus suppressing NOx formation. A preferred construction would be that the air staging structure would be constructed of suitable ceramic material, due to the elevated temperature to which it is exposed. The arrangement of the air apertures 76, could be adjusted as to the number of holes, length of holes, direction and spin angle to provide minimum NOx and control of flame shape and characteristic. It is to be noted that despite the relatively more restricted air flow through primary and secondary air passages 74 and 76, as compared with the air flow structures illustrated in Figure 4, both embodiments of the invention are suitable for use in regenerative systems and both burners can function as flues when the direction of the flow in the furnace is reversed. Vitiated air provided by the method shown on Figure 1 at the fan inlet can be applied to the embodiments described in Figure 2, Figure 3, Figure 4, and Figure 5 and this will further suppress NOx substantially below the levels possible with these embodiments alone.

Figures 6 through 10 (and also Figure 1) illustrate various ways to depress NOx formation by using vitiation of combustion air with products of combustion. Referring now to Figure 6, the fifth embodiment of the invention is illustrated in which a burner 90, having an air intake 94 and a regenerative bed 92, is fitted with six converging fuel lines 96, six venturies 98, and six vitiation ducts 100. The burner 90 leads to a furnace chamber via a port 101. By a total of 6 converging fuel lines, therefore, fuel is provided to the burner via its respective venturies 98 within the burner refractory. (For the purpose of the present invention, a venturi is a hollow area having flared cylindrical shape.) The injection of the high pressure fuel from the fuel lines 96 generates a negative pressure region in the venturies 98, which negative pressure region induces furnace gases back from the furnace chamber through the vitiation ducts 100 to the site of combustion. Recirculation of products of combustion in this manner cools the flame and reduces NOx formation during combustion. If necessary, during the off cycle when no fuel gas is passing through the fuel lines 96, a small quantity of combustion air and/or recirculated products of combustion can be passed into the burner 90 to maintain cooling and to prevent cracking of any stagnant gaseous hydrocarbons present. The burner 90 functions efficiently, in reverse, as a flue.

Although not illustrated in Figure 6, optionally the vitiation ducts 100, the venturies 98 or the converging fuel lines 96 may be angled forward or backward or with a tangential component to generate a hyperboloid stream of fuel and induced products of combustion. The angles and spiral components are specifically designed to suit different applications. These variations may be employed to alter the flame shape and geometry to suit a specific application. These options may also be exercised with respect to Figures 2, 3, 7, 9 and 10 herein.

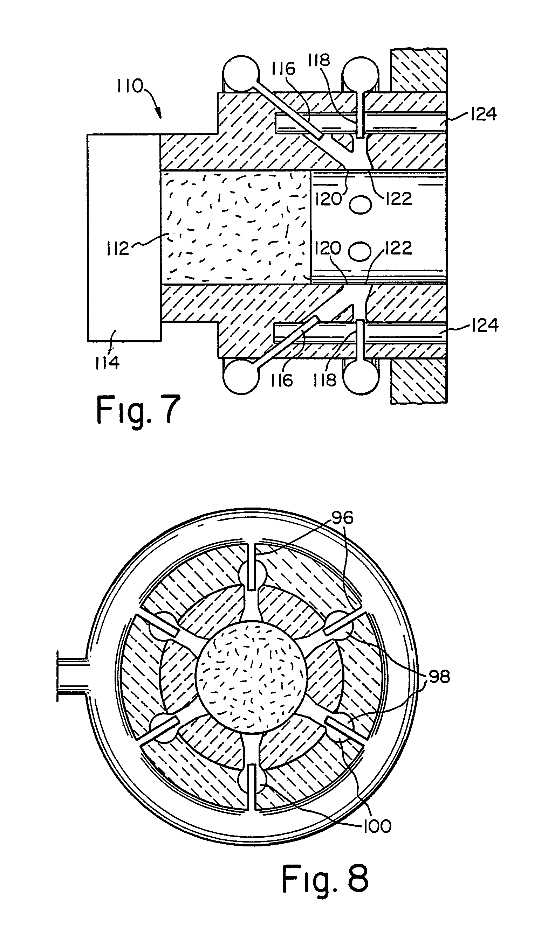

Figure 8 is a sectional view taken along line VIII-VIII of Figure 6. The six evenly-spaced converging fuel lines 96 and their respective venturies 98 can be readily seen in their "planar concentric" configuration.

Figures 7, 9 and 10 illustrate additional embodiments whereby products of combustion are recirculated for NOx suppression. Figure 7 illustrates a burner 110 having an air intake 114 in series with the regenerative bed 112. The burner 110 incorporates venturies 120, 122 and vitiation ducts 124 similar to those of the previous embodiment, but supplements these structures with the first and second converging fuel lines 116, 118 as shown. The first converging fuel lines 116 are disposed within first venturies 120 and the second converging fuel lines 118 are disposed within the second venturies 122 to create multiple converging fuel streams; the pressure phenomena (negative pressure region) generated by the fuel streams within the respective venturies function to induce products of combustion back through the vitiation ducts 124 as effected by the previous embodiment of the invention. Additionally, fuel may be staged between the first converging fuel lines 116 and the second converging fuel lines 118 for further control of flame shape and characteristics. Recirculation of products of combustion into the burner contributes to NOx minimization. More particularly, the collision of the streams along with the variance in the staging of the fuel--and commensurate recirculation of products of combustion--creates turbulence levels which can adjustably determine flame geometry.

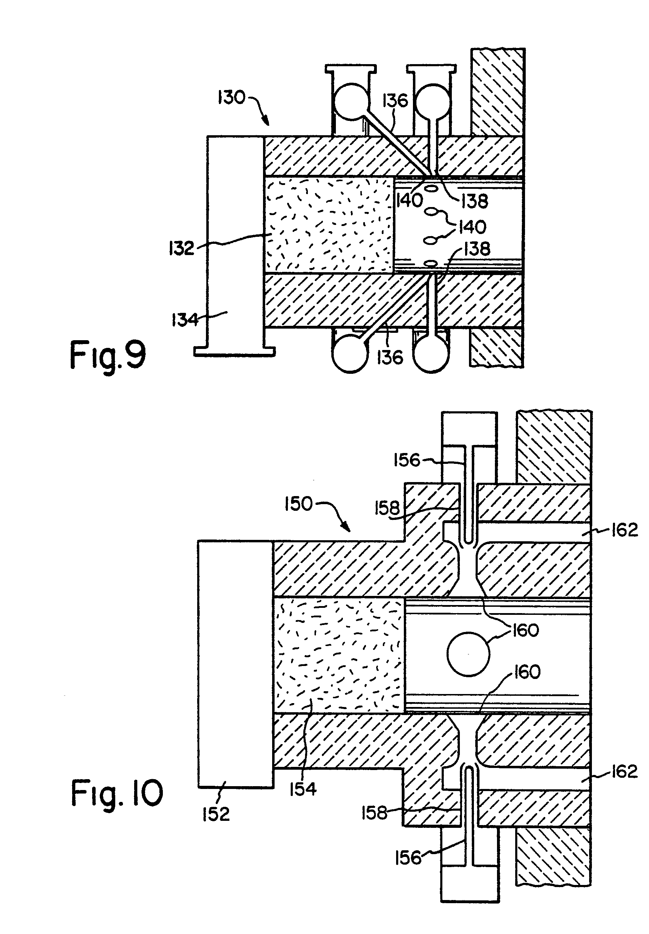

Figure 9 illustrates a sixth embodiment of the invention similar to the embodiment illustrated in Figure 7. A burner 130 includes an air intake 134 in series with a regenerative bed 132. Combustion is effected by means of first converging fuel lines 136 and second converging fuel lines 138. Each set of immediately adjacent first and second converging fuel lines 136, 138 converges the fuel at a relative angle greater than 30°, such as the relative 45° angle as shown. The collision of the injected fuel, along with variance in the quantity of fuel exiting each nozzle, creates turbulence levels which can adjustably determine flame geometry. The convergence chamber 140 does not itself induce recirculation of products of combustion; for the purpose of this sixth embodiment of the invention, combustion air via air intake 134 is vitiated with products of combustion recirculated via appropriate fluid-channeling means (not shown), including but not limited to the recirculation means illustrated schematically in Figure 1 herein or, alternatively as further disclosed.

Referring now to Figure l0, combustion air entering the burner 150 first passes through the regenerative bed 154 in series with the air intake 152 as shown. The linear fuel lines 156 are each paired with coaxial annular fuel lines 158. (Annular fuel lines 158 may have a perforate annular nozzle, not shown, if desired.) Each pair of combined coaxial fuel lines, which yield coaxial streams, lead into the respective venturies 160. Although the coaxial fuel lines may obviously create a coaxial fuel/fuel stream, fuel/air and fuel/products of combustion streams are also contemplated within the scope of the present invention. The coaxial streams create a negative pressure region in the venturi 160 which in turn induces recirculation of products of combustion from the furnace through the vitiation ducts 162. For the purpose of this eighth embodiment of the invention, the fluid exiting the annular fuel line 158 is most preferably a low pressure cold air having an energy source therein, which would provide a cooling media to the linear fuel line 156 to promote structural stability thereof. (Low pressure cold air energy sources may also be used in the other embodiments of the present invention where appropriate.) As with the previously described embodiments of the invention, recirculation of products of combustion depresses NOx formation.

In all embodiments of the invention disclosed herein, a plurality of fuel nozzles in the disclosed positions may be provided, preferably in radial configuration. Moreover, convergence and/or entrainment of the fuel exiting the fuel nozzles may be accomplished with convergence angles of the fuel nozzles between 30° and about 150°, generally.

Typical fuels for use in these regenerative systems include gas and oil. Refractory materials are well known in the art and are generally ceramic compositions prepared to specifications required for particular process applications.

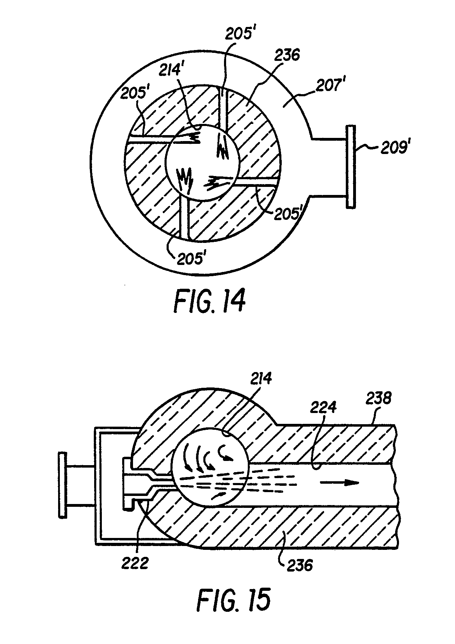

In yet another embodiment of the present invention shown in Figures 11 and 12, hot flue gases containing products of combustion ("POC") leave the furnace interior 210 under the influence of a forced or induced draft initiated by a remotely located fan means (not shown) and exit via a first duct 212 to then enter a burner chamber 214 of the burner 204 which is in a non-firing, exhaust mode. A medium pressure or a high pressure energy source, which may include air, POC or gaseous fuel, is pumped through a feed conduit 220 and discharged preferably at a high velocity through a nozzle 222, communicating therewith, into the burner chamber 214. The nozzle 222 is aligned co-axially with the longitudinal axis of an interconnecting duct 224. Duct 224 communicates at its ends with the burner chambers 214 and 214′, of the spaced-apart left and right bank burners 204 and 204′, respectively. The interconnecting duct 224 is preferably tangentially offset from the sidewalls of burner chambers 214 and 214′, as shown in Figures 12 and 15. The high velocity gas stream which is emitted from the nozzle 222 creates an induction of a portion of the hot flue gas entering the chamber 214. The portion of hot flue gas so induced is entrained into the high velocity gas stream and passes through the interconnecting duct 224. A high kinetic energy is imparted to the gas stream exiting the nozzle 222 which is sufficient to move the subject gas stream and its entrained portion of flue gas from the left burner bank 204 to the right burner bank 204′ via interconnecting duct 224, without the need for any auxiliary fans or blowers.

The major portion of the hot flue gas which exhausts from the furnace 206 at first duct 212 and enters the chamber 214, passes downwardly through a left heat storage bed or regenerator 216, of known construction, which extracts the sensible heat from the flue gas and stores the heat for later preheating of combustion air when the firing cycle is reversed. As best seen in Figure 12, cooled flue gas leaves the regenerator bed 216 by way of a duct 218, and is exhausted through a port 226 of a valve assembly 230. A rotatable valve plate 232 directs the cooled flue gas to the exhaust port 226 of valve 230 and simultaneously introduces cool combustion air therein by way of a port 228. The combustion air port 228 may be opened directly to the atmosphere, in a negative draft mode, or it may be connected to a positive pressure, fan driven system, all in a known manner. The cool combustion air passes through the valve 230 and enters a duct 218′ whereupon it is passed upwardly through a previously heated regenerator bed 216′. Stored heat in the regenerator bed 216′ is given up to preheat the incoming combustion air which then enters the right hand burner bank 204′ at chamber 214′. The high velocity gas stream from nozzle 222 and its entrained hot flue gas, exiting interconnecting duct 224, enters the burner chamber 214′ and mixes with the preheated combustion air therein to vitiate or dilute the combustion air stream by lowering the oxygen level thereof. The degree of vitiation to be achieved is controlled by the mass and velocity of the high velocity gas stream introduced through the feed conduit 220 and nozzle 222. By way of example, vitiation of the combustion air stream is controllable within a range of between about 15% to about 21% as measured in the mixed air and gas stream exiting the burner chamber 214′ of the right bank burner 204′.

During the firing mode shown in the drawings, a fuel is introduced through a fuel conduit 205, positioned within the right bank burner 204′. A small quantity of ambient bled air or POC is preferably passed through feed conduit 220, and nozzle 222′ during the right hand firing mode in order to cool those components. Simultaneously, when in the right bank firing mode, the left bank fuel conduit 205 is also preferably cooled by a small flow of ambient purge air or POC therethrough.

Primary combustion is initiated in the burner chamber 214′ of the right bank burner 204, and propagates through the duct 212′ into a combustion chamber which can be the open interior 210 of the furnace or the interior of the radiant tube 215 connected to the duct 212′. A layer of refractory insulation 234, 234′ envelopes the ducts 212, 212′ to protect the support structure 208 or the radiant tube 215 from the high heat of combustion generated, within the ducts 212 and 212′. A layer of insulation 236 is also preferably applied around the burner banks 204, 204′, regenerator beds 216, 216′, and interconnecting duct 224, to minimize heat losses. An outer protective metal surface 238 is also applied to protect the insulation layer 236 against inadvertent damage.

The right hand firing mode cycle is completed as the flue gases containing POC exit the furnace 206 through the combustion chamber of first duct 212 on the left burner bank 204. As previously described, a portion of these flue gases are induced into the interconnecting duct 224 with the balance passing through the heat regenerator bed 216. The cooled flue gas is vented to a waste stack communicating with exhaust port 226 which is either connected to a suction provided by a negative draft system or vented to the stack when the combustion air port 228 is under the influence of a positive pressure air supply system.

After a given period of time elapses, the firing direction is reversed from the right hand mode shown to a left hand mode. The direction of combustion air and flue gas within the ducts 218, 218′, and 224, as well as in the combustion/exhaust ducts 212, 212′, is reversed from that shown in Figures 11 and 12. When the left bank burner 204 is in the firing mode, the valve plate 232 is rotated to the position indicated by phantom lines 232′, which then directs cool combustion air upwardly through duct 218 for preheating in regenerator bed 216. In this mode, valve plate 232′ concurrently directs the cooled flue gas now exiting from duct 218′ to the waste stack via the exhaust port 226.

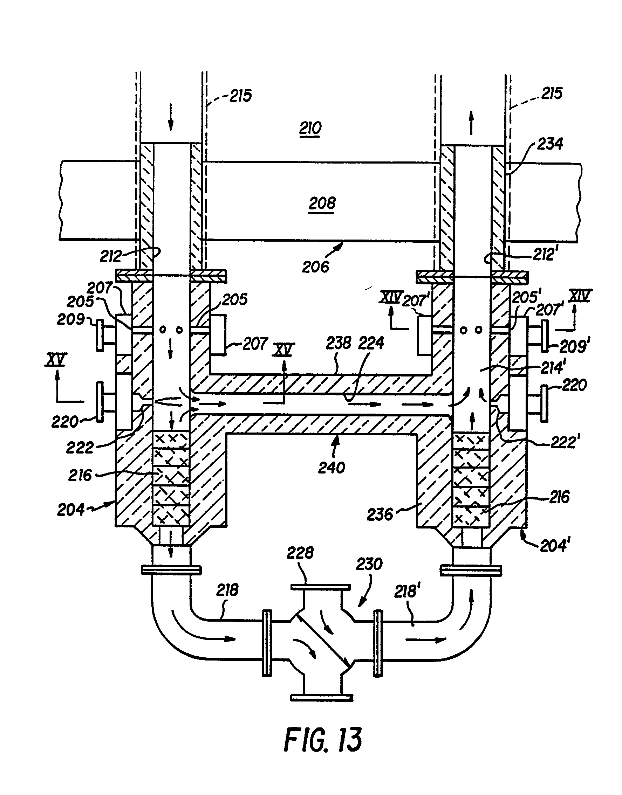

A slightly modified apparatus 240 embodying the principals of the present invention is depicted in Figures 13-15. The apparatus 240 operates generally in the same manner as described, with the exception that the fuel stream is introduced tangentially into the swirling stream of flue gases exiting from the interconnecting duct 224. As seen in Figure 15, the high velocity gaseous jet from nozzle 222 induces a flow of a portion of the flue gas from chamber 214 into the interconnecting duct 224. The tangential offset of the duct 224 with the sidewall of chamber 214 and co-axial alignment of nozzle 222 with duct 224 creates a swirling motion in the flue gas within chamber 214 which provides an outer layer of highly enriched hot POC which is induced to pass into the duct 224 by the high velocity gas stream from nozzle 222. This swirling POC enrichment feature is also achieved in the embodiment of Figures 11-12. As seen in Figure 14, a plurality of fuel conduits 205′ supply a plurality of fuel streams tangentially to the chamber 214′ to also impart a desired swirling motion to the combustion mixture. The fuel is supplied to the conduits 205′ by way of an inlet duct 209, and a communicating, annular manifold 207′ which surrounds the burner chamber 214′.

The flue gas/POC which is recirculated back into the combustion process to vitiate the combustion air is at a temperature approximately equal to the gases entering the furnace chamber. As a consequence, the sizing of regenerator 216, 216′ can be significantly smaller than if vitiation were used on the stream entering the regenerator. In addition, the cycle efficiency when compared to using vitiated air directly into the regenerator is increased due to the fact that the self-vitiating flue gas/POC stream is already at temperatures between about 1800° to 2000°F when injected into the burner chambers 214, 214′. These obvious economic advantages are achieved while the desired ecological goal of NOx suppression is also realized.

Although the invention has been described in connection with specific materials and specific embodiments, the invention is to be limited only insofar as is set forth in the accompanying claims.

## Claims

1. An improved regenerative burner apparatus of the type having a pair of first and second spaced-apart regenerative burners, each of said burners including a chamber for mixing a fuel and a stream of preheated combustion air supplied from a regenerative heat storage bed associated with each of said burners, said burners adapted to operate cyclically wherein a first of said burners is in a firing mode directing hot gases into a furnace interior while a flue gas stream exits the furnace and passes through the second burner chamber and then passes to the regenerative heat storage bed associated therewith said second burner, the improvement comprising a means incorporated within said regenerative burner apparatus for repressing Nox formation.

2. The regenerative burner apparatus according to claim 1, wherein said means for repressing NOx formation further comprises a generally cylindrical burner baffle having apertures therein adjacent a fuel nozzle positioned upstream of the combustion site for selectively directing combustion air.

3. The regenerative burner apparatus according to claim 1, wherein said means for repressing NOx formation further comprises a plurality of fuel nozzles angled to entrain combustion gases and air into a combustion site.

4. The regenerative burner apparatus according to claim 1, wherein said means for repressing NOx formation further comprises a means for effecting staged combustion including a burner body having a first set of a plurality of fuel nozzles delivering 30-70% combustion fuel upstream of a second set of a plurality of fuel nozzles delivering the remaining 30-70% combustion fuel whereby primary combustion occurs in the area of said first set and secondary combustion occurs in the area of said second set.

5. The regenerative burner apparatus according to claim 1, wherein said means for repressing NOx formation further comprises a burner having a fuel nozzle and a means for introducing a portion of combustion air into the area of the burner immediately adjacent said fuel nozzle and further having means for introducing the remainder of said combustion air downstream of said fuel nozzle.

6. The regenerative burner apparatus according to claim 5, wherein said burner has at least one fuel nozzle disposed within a venturi leading to a central chamber of said burner such that said venturi is in fluid communication with said furnace chamber via a vitiation duct therebetween.

7. The regenerative burner apparatus according to claim 6, wherein said burner includes four nozzles disposed within a first venturi leading from said fuel nozzle to a central chamber of said burner, each of the remaining two of said fuel nozzles being disposed within a second venturi, each of said first venturies converging with each of said second venturies and each of said first and second venturies being in fluid communication with said furnace chamber via a vitiation duct therebetween.

8. The regenerative burner apparatus according to claim 7, wherein said fuel nozzle appends a linear fuel line coaxial with an annular fuel line.

9. The regenerative burner apparatus according to claim 1 wherein said burner includes means for vitiating combustion air with products of combustion from said furnace chamber.

10. The regenerative burner apparatus according to claim 1, wherein said means for repressing NOx formation further comprises a vitiation duct interconnecting the two burners on the furnace side of the regenerative beds and communicates with the interior chamber portion of each burner, and a nozzle means positioned at each of the burner chambers to alternately inject a high velocity gas stream into the interconnecting duct.

11. The regenerative burner apparatus according to claim 10, wherein said nozzle means includes a nozzle associated with each of said burner chambers, each nozzle having an orifice aligned substantially coaxially with said interconnecting duct.

12. The regenerative burner apparatus according to claim 11, wherein said interconnecting duct is aligned tangentially relative to each of said burner chambers to impart a swirling motion in said hot flue gas whereby a layer of highly enriched products of combustion gas is entrained in said gas stream.

13. The regenerative burner apparatus according to claim 10, wherein each of said burner chambers includes a plurality of fuel inlet nozzles arranged tangentially relative to a bore of said chamber whereby a swirling motion is imparted to gases flowing therein to improve mix of the fuel, preheated combustion air and vitiating hot flue gases.

14. A method of repressing NOx formation in a twined pair of regenerative burners of the type having heat regeneration beds associated therewith for alternately withdrawing heat from a flue gas exiting a furnace and heating a combustion air stream being fed therethrough, comprising the steps of:

withdrawing a stream of hot flue gas from the furance;

injecting a stream of gas into said flue gas stream;

entraining a portion of said hot flue gas within said injected gas stream;

passing said stream of injected gas and said entrained portion of hot flue gas to a burner chamber; and

vitiating a combustion process in said burner chamber with said portion of hot flue gas whereby NOx formation is repressed.

Fig. 1

Fig. 2

Fig. 2a

Fig. 3

60

64    66    62

**Fig. 4**

64    66

61

70

74    76    78

80    82    76

74    76

72

**Fig. 5**

90    96    100

VIII

98

94    98    101

92    96    98

100

VIII

**Fig. 6**

Fig. 7

Fig. 8

Fig.9

Fig. 10

FIG. 11

FIG. 12

FIG. 13

FIG. 14

FIG. 15